# EUROPÄISCHE PATENTSCHRIFT

(11) **EP 0 977 291 B1**
(45) Veröffentlichungstag und Bekanntmachung des Hinweises auf die Patenterteilung: **29.01.2003**
(21) Anmeldenummer: 99113744.9
(22) Anmeldetag: 14.07.1999
(51) Int. Cl.: H01M 4/02, H01M 4/62, H01M 4/04

(54) **Positivelektrode von Lithium-Ionen-Zellen für Hochlastanwendungen**
Positive electrode of a lithium ion cell for use at high load
Electrode positive d'une pile au lithium pour une utilisation à forte charge

(30) Priorität: 29.07.1998 DE 19834091
(43) Veröffentlichungstag der Anmeldung: 02.02.2000
(73) Patentinhaber: NBT GmbH, 30419 Hannover (DE)
(72) Erfinder: Bäuerlein, Peter, Dr., 65520 Bad Camberg (DE); Neumann, Sabine, 60435 Frankfurt (DE)
(74) Vertreter: Lins, Edgar, Dipl.-Phys. Dr.jur.

(56) Entgegenhaltungen:
- EP-A- 0 601 754
- EP-A- 0 858 117
- WO-A-97/19477
- WO-A-98/05083
- PATENT ABSTRACTS OF JAPAN vol. 1998, no. 12, 31. Oktober 1998 (1998-10-31) & JP 10 188993 A (RICOH CO LTD), 21. Juli 1998 (1998-07-21) -& CHEMICAL ABSTRACTS, vol. 129, no. 9, 31. August 1998 (1998-08-31) Columbus, Ohio, US; abstract no. 111378, INOUE, TOMOHIRO ET AL: "Secondary nonaqueous electrolyte batteries" XP002122842

## Beschreibung

Die Erfindung betrifft elektrochemische Zellen und speziell mit hohen Strömen belastbare positive Elektroden für Lithium-Ionen-Zellen mit flüssigem, nicht wäßrigem Elektrolyten.

In den letzten Jahren wurden bedeutende Fortschritte in der Batterietechnik erzielt. Insbesondere wurde durch die Entwicklung des elektrochemischen Systems der Lithium-Ionen-Zellen ein beträchtlicher Fortschritt hinsichtlich der speicherbaren Energiedichte bei Normaltemperatursystemen erzielt. Durch ihren hohen Energieinhalt sind Lithium-Ionen-Zellen besonders für solche Anwendungen interessant, bei denen hohe Leistungsanforderungen an den Energiespeicher bestehen. Die hohe mittlere Entladespannung von ca. 3,5 V gestattet es, schon bei Strömen, die 1C entsprechen, eine ausreichende Leistung zu entnehmen. Unter 1C wird dabei eine theoretische Stromstärke verstanden, mit der der Energieinhalt einer vollgeladenen Zelle innerhalb einer Stunde vollständig entladen wird. Es besteht bei Elektrostraßenfahrzeugen und insbesondere bei Hybridfahrzeugen, die ihre Spitzenleistungsanforderung aus einer Batterie beziehen, ein Bedarf an Batterien, die ein geringes Gewicht besitzen und große Leistungen abgeben können. Es sind daher schon verschiedene Vorschläge gemacht worden, die Strombelastbarkeit der Lithium-Ionen-Zellen zu verbessern. Bekanntlich müssen mit hohen Strömen belastbare Zellen Elektroden eine große Oberfläche besitzen und werden deshalb als Dünnfilmelektroden ausgebildet, wobei in der Regel die Belastbarkeit der positiven Elektroden die Leistungsfähigkeit der Zellen limitiert.

Eine Methode zur Herstellung dünner Elektroden besteht darin, das elektrochemisch aktive Elektrodenmaterial sowie Leitmittelzusätze wie Leitruße und/oder Graphite mit pulverförmigen Bindemitteln wie Polytetrafluorethylen- (PTFE) oder Polyethylenpulvern (PE) zu mischen und auf dünne metallische Folien aufzuwalzen oder in Streckmetalle einzuwalzen. Die metallischen Trägerstrukturen dienen dabei gleichzeitig als Stromableiter. Weiterhin sind Pastierverfahren bekannt, bei denen die aktiven Elektrodenmaterialien und das Leitmittel in einer Lösung des Bindemittels dispergiert und als Paste auf die metallische Trägerstruktur aufgebracht sowie anschließend getrocknet werden. Die bekannten Pastierverfahren gestatten die Herstellung von Elektroden mit großen Oberflächen. Allerdings führen Binder mit elektrischen Isolationseigenschaften zu einem beträchtlichen Ansteigen der Überspannung und damit zu Verlusten beim Laden und Entladen der fertigen Zellen. Zur Lösung dieses Problems wurde bereits vorgeschlagen Polyvinylidendifluorid-haltige (PVdF) Bindemittel einzusetzen.

Spezielle Verbesserungen der Strombelastbarkeit von nicht wäßrigen Lithium-Ionen-Zellen sind aus dem Dokument US-A 5,714,279 bekannt. Den Elektroden soll danach ein Teil des im Elektrolyten verwendeten Leitsalzes in fein verteilter Form zugesetzt werden. Durch das Herauslösen des feinkristallienen Leitsalzes aus den Elektroden durch den Elektrolyten in der fertigen Zelle sollen zusätzliche Poren gebildet werden, die die Elektrodenoberfläche vergrößern und die Strombelastbarkeit der Zellen verbessern.

Die Erfindung hat sich die Aufgabe gestellt, Lithium-Ionen-Zellen anzugeben, die mit Strömen belastbar sind, die mindestens dem 10C Strom entsprechen. Eine weitere Aufgabe der Erfindung ist es, ein für die Herstellung solcher Zellen geeignetes Verfahren anzugeben.

Erfindungsgemäß wird die Aufgabe durch die gattungsgemäß im Oberbegriff des Anspruchs 1 angegebenen Zellen gelöst, die die im Anspruch 1 angegebenen Merkmale besitzen.

Überraschender Weise zeigen Lithium-Ionen-Zellen, deren positive Elektroden Polyvinylidendifluorid-Hexafluoropropylen-Copolymer (PVDF-co-HFP) als Bindemittel besitzen und bei denen der Anteil von Hexafluoropropylen im Copolymer 15 - 30mol% beträgt, in Zusammenhang mit den weiteren genannten Merkmalen die besten Kapazitätsausbeuten bei Entladung der Zellen mit hohen Stromstärken. Unter hohen Stromstärken werden dabei Ströme verstanden, die mindestens dem 10C Strom entsprechen.

Entsprechend den Unteransprüchen bestehen weitere vorteilhafte Ausgestaltungen der Erfindung darin, daß die mittlere Teilchengröße des aktiven Materials und des Graphits der positiven Elektroden zwischen 1 und 15 µm liegen, wobei das aktive Material vorzugsweise lithiumhaltiges Kobaltoxid und das Leitmittel ein Gemisch aus Leitruß und expandierten Graphit ist.

Die Lithium-lonen-Zellen und deren erfindungsgemäße positive Elektroden werden dadurch hergestellt, daß das Bindemittel im Lösungsmittel vollständig aufgelöst wird und darin das aktive Material sowie das Leitmittel homogen dispergiert werden, die so erhaltene Elektrodenpaste in einer Schichtdicke auf ein elektrisch leitfähiges Trägermaterial aufgebracht wird, die zu einer Flächenbelegung von 4 bis 15 mg/cm² führt, wobei das Lösungsmittel mit einer solchen Geschwindigkeit abgedampft wird, daß eine Porosität der einsatzfertigen Elektroden von 40 bis 65% erhalten wird. Überraschenderweise hat sich gezeigt, daß bei Einhaltung der erfindungsgemäßen Parametern sowie der vorzugsweisen Verwendung von N-Methylpyrrolidon (NMP) als Lösemittel die Elektroden mit der besten Strombelastbarkeit erhalten werden.

Die Erfindung wird anhand der nachfolgenden Beispiele und Abbildungen näher erläutert.

Es zeigen:
Figur 1 - den Vergleich der Entladekapazität im Spannungsbereich zwischen 4 und 2,8 V für Zellen, deren Kathoden unterschiedliche Bindemittel enthalten;
Figur 2 - den Vergleich der Entladekapazitäten in Abhängigkeit von der Spannung für Zellen, deren Kathoden unterschiedliche Mengen an Leitmittel enthalten;
Figur 3 - den Vergleich der Entladekapazitäten in Abhängigkeit von der Spannung für Zellen, deren Kathoden unterschiedlicher aktiver Materialien enthalten und
Figur 4 - den Vergleich der Entladekapazitäten in Abhängigkeit von der Spannung für Zellen, deren Kathoden bei unterschiedlichen Temperaturen getrocknet wurden.

### Beispiel 1

Als Standardtestobjekt dienen aus unter Preßdruck stehende Folien aufgebaute Druckflachzellen, in denen jeweils 10 cm² positive Elektrode, eine kohlenstoffhaltige negative Elektrode und zwei Lagen eines Polypropylen-Separators verwendet werden. Die Elektroden werden mit einem Druck von 50 N/cm² beaufschlagt. Als Elektrolyt dient eine 1 molare Lösung von Lithiumhexafluorophosphat (LiPF₆) in einem Lösungsmittelgemisch bestehend aus Ethylencarbonat (EC) : Dimethylcarbonat (DMC) : Diethylcarbonat (DEC) im Volumenverhältnis von 2 : 2 : 1. Die in allen Beispielen verwendete negative Elektrode wird dadurch erhalten, daß 10 Gew.% eines Polyvinylidendifluorid-Hexafluoropropylen-Copolymers, welches 10 mol% Hexafluoropropylen im Copolymer enthält (PVdF-co-HFP-10) in N-Methylpyrrolidon (NMP) vollständig gelöst wird und darin 85 Gew.% eines kugelförmigen Graphitpulvers mit einer mittleren Korngröße (D₅₀) von 6 µm sowie 5 Gew.% eines Leitrußes dispergiert werden. Die homogene Paste wird auf eine ca. 10 µm dicke Kupferfolie in einer Schichtdicke aufgebracht, die eine Flächenbelegung von ca. 4 bis 15 mg/cm² entspricht und anschließend getrocknet. Die so erhaltenen negativen Elektroden werden einheitlich in allen Beispielen verwendet.

Analog der Herstellung der negativen Elektroden werden 5 Gew.% PVdF-co-HFP-Polymer mit einem HFP-Anteil von 22 mol% (PVdF-co-HFP-22) in N-Methylpyrrolidon vollständig aufgelöst. In der Lösung des Bindemittels werden 5 Gew.% Leitruß sowie 5 Gew.% expandierten Graphit mit einem D₅₀ < 6 µm und 85 Gew.% eines Lithium-Mangan-Spinells mit einem D₅₀-Wert < 12 µm homogen dispergiert. Die so erhaltene Aktivmasse wird auf eine 20 µm dicke Aluminiumträgerfolie aufgebracht. Die Flächenbelegung beträgt ca. 4 bis 15 mg/cm².

### Vergleichsbeispiel 1

Analog Beispiel 1 wird eine Elektrode hergestellt mit dem Unterschied, daß 10 Gew.% eines Polyvinylidendifluorid-Homopolymer (PVdF-0). als Bindemittel eingesetzt wird.

### Vergleichsbeispiel 2

Analog Beispiel 1 werden positive Elektroden hergestellt mit dem Unterschied, daß 10 Gew.% eines Polyvinylidendifluorid-Hexafluoropropylen-Copolymer, welches 10 mol% Hexafluoropropylen im Copolymer enthält (PVdF-co-HFP-10), als Bindemittel eingesetzt wird und als Leitmittel nur 5 Gew.% Leitruß verwendet wird.

### Beispiel 2

Analog Beispiel 1 wird eine positive Elektrode hergestellt mit dem Unterschied, daß als Leitmittel nur 5 Gew.% Leitruß einsetzt wird.

### Beispiel 3

Analog Beispiel 1 wird eine positive Elektrode hergestellt mit dem Unterschied, daß 7 Gew.% Leitruß einsetzt werden.

### Vergleichsbeispiel 3

Analog Beispiel 1 werden positive Elektroden hergestellt mit dem Unterschied, daß nur 3 Gew.% Leitruß eingesetzt werden.

### Vergleichsbeispiel 4

Analog Beispiel 1 werden positive Elektroden hergestellt mit dem Unterschied, daß 10 Gew.% Leitruß eingesetzt werden.

### Beispiel 4

Analog Beispiel 1 werden positive Elektroden hergestellt mit dem Unterschied, daß als aktives Material ein Lithium-Mangan-Spinell mit einem D₅₀-Wert < 11 µm eingesetzt wird.

### Beispiel 5

Analog Beispiel 1 werden positive Elektroden hergestellt mit dem Unterschied, daß als aktives Material ein Lithium-Kobaltoxid mit einem D₅₀-Wert < 12 µm eingesetzt wird.

### Beispiel 6

Analog Beispiel 1 werden positive Elektroden hergestellt mit dem Unterschied, daß als aktives Material ein Lithium-Mangan-Spinell mit einem D₅₀-Wert < 12 µm und 10 Gew.% an expandierten Graphit eingesetzt wird.

Die Zusammensetzungen der positiven Elektroden in den Beispielen 1 bis 6 und den Vergleichsbeispielen 1 bis 4 sind zusammenfassend in Tabelle 1 dargestellt.

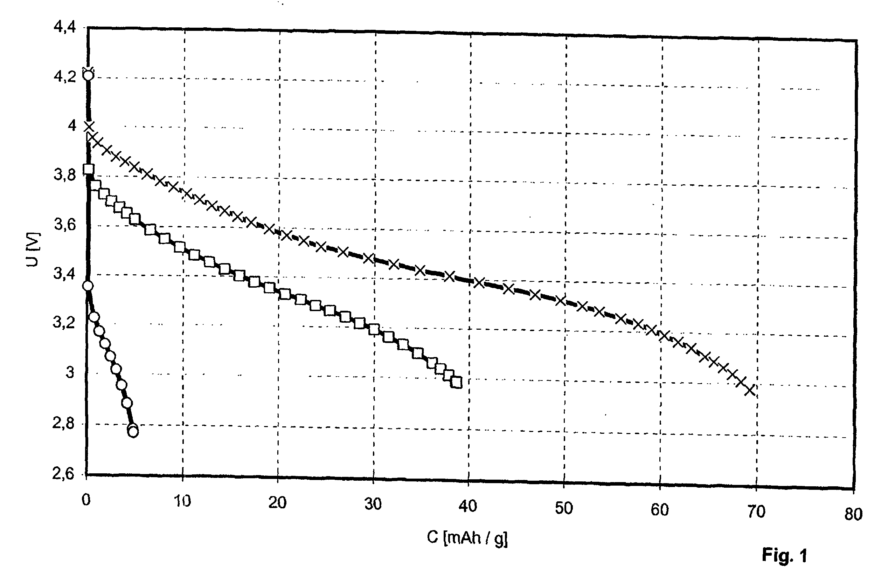

Figur 1 zeigt, daß Zellen mit einem erfindungsgemäß in den positiven Elektroden verwendeten Bindemittel wesentlich höhere Kapazitäten entnommen werden können. Dabei wurde
   die Kurve - × - mit Zellen gemäß Beispiel 1 und
   die Kurve - o - mit Zellen gemäß dem Vergleichsbeispiel V1 sowie
   die Kurve - □- mit Zellen gemäß dem Vergleichsbeispiel V2 erhalten.

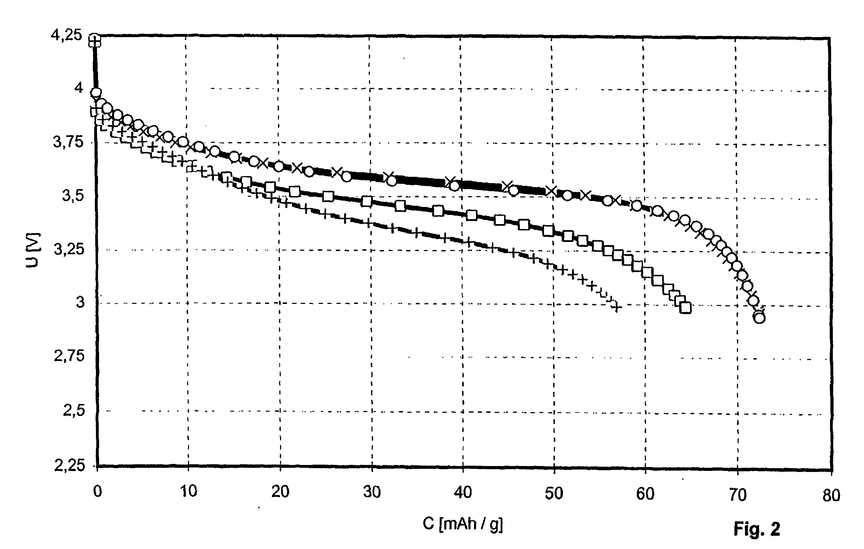

Figur 2 zeigt die höheren Kapazitätsausbeuten der Zellen gemäß
   Beispiel 2 -×- und
   Beispiel 3 -o- gegenüber den Zellen nach
   Vergleichsbeispiel V3 -□- und
   Vergleichsbeispiel V4 - + -.

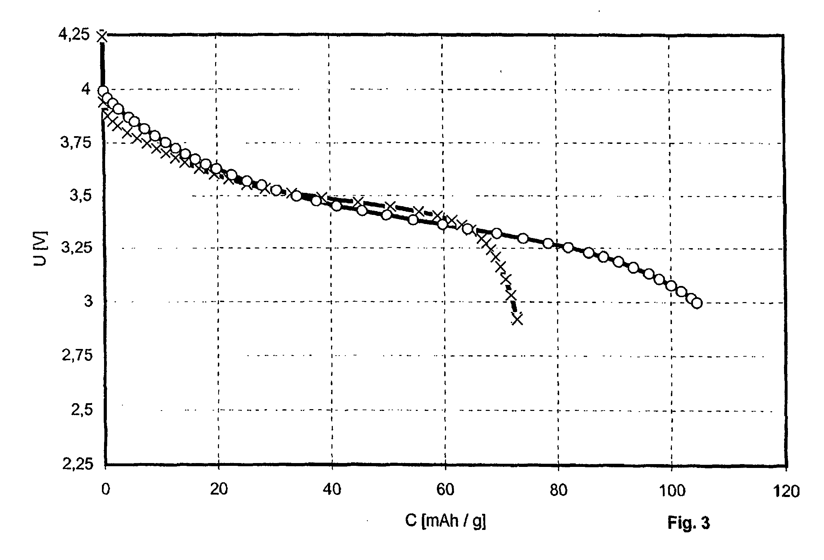

In Figur 3 sind die mit gemäß
   Beispiel 4 -×- und
   Beispiel 5 -o-
   hergestellten Zellen erzielbaren Kapazitätsausbeuten dargestellt.

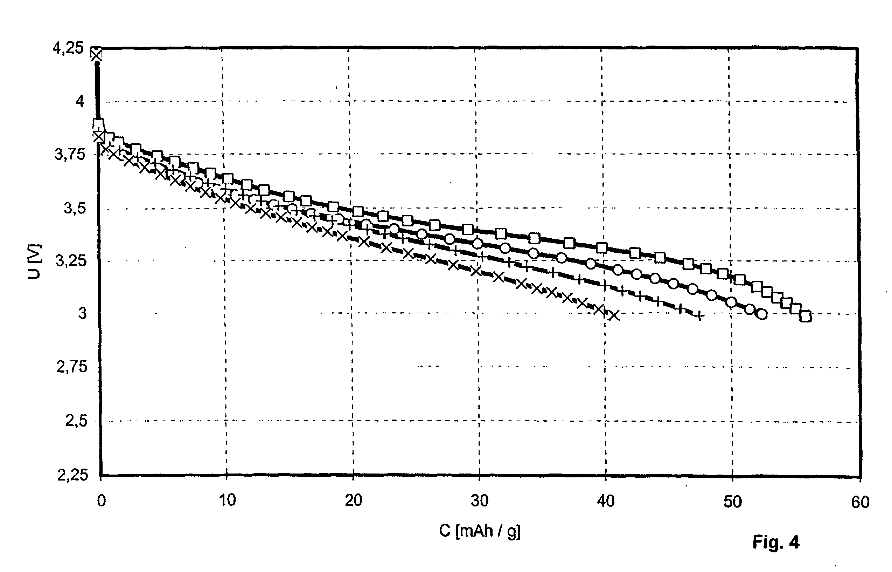

Die Überlegenheit der erfindungsgemäßen Trocknungsbedingungen ist Figur 4 zu entnehmen, in der die
Kurve -□- Kapazitätsausbeuten von Zellen gemäß Beispiel 6 getrocknet bei 90°C,
Kurve -o- Kapazitätsausbeuten von Zellen gemäß Beispiel 6 getrocknet bei 120°C,
Kurve - +- Kapazitätsausbeuten von Zellen gemäß Beispiel 6 getrocknet bei 150°C sowie
Kurve -×- Kapazitätsausbeuten von Zellen gemäß Beispiel 6 getrocknet bei 180°C zeigen.

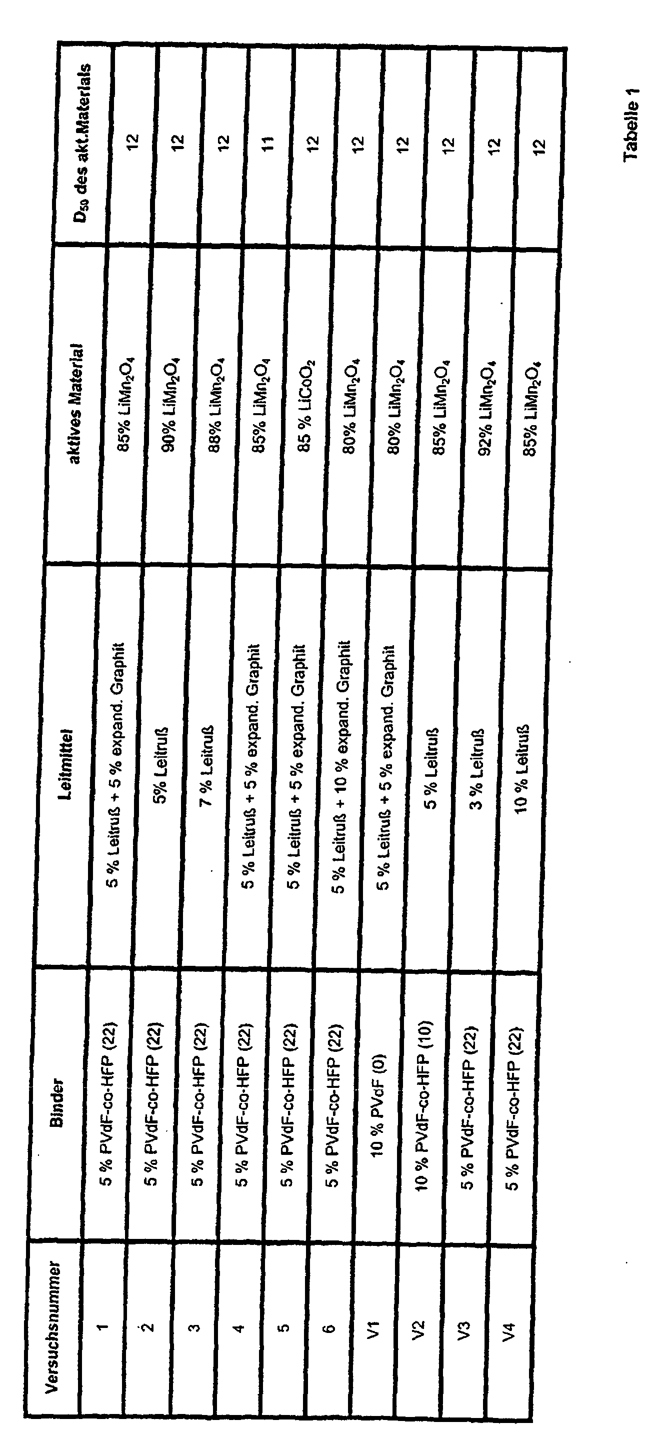

## Patentansprüche

1. Lithium-lonen-Zellen für Hochlastanwendungen, **dadurch gekennzeichnet, daß** die positiven Elektroden aus 4 bis 8 Gew.% eines Leitrußes und 0 bis 15 Gew.% eines expandierten Graphits sowie 3 bis 10 Gew.% eines Polyvinylidendifluorid-Hexafluoropropylen-Copolymer mit einem Anteil von 15 bis 30 mol% Hexafluoropropylen im Copolymer sowie als Ergänzung zu 100 % aus einem lithiumhaltigen Metalloxid als aktive Masse bestehen, die auf einen metallischen Träger aufgebracht ist, wobei die Flächenbelegung 4 bis 15 mg/cm² und die Porosität 40 bis 65% beträgt.

2. Zelle nach Anspruch 1, **dadurch gekennzeichnet, daß** die mittlere Teilchengröße des aktiven Materials und des Graphits in der positiven Elektrode zwischen 1 und 15 µm liegt.

3. Zelle nach Anspruch 1 und/oder Anspruch 2, **dadurch gekennzeichnet, daß** das aktive Material in der positiven Elektrode ein lithiumhaltiges Kobaltoxid ist.

4. Verfahren zur Herstellung einer Zelle nach einem oder mehreren der Ansprüche 1 bis 3, **dadurch gekennzeichnet, daß** das Bindemittel für die positiven Elektroden vollständig in einem Lösungsmittel aufgelöst wird und das aktive Material sowie das Leitmittel in der Lösung des Bindemittels homogen dispergiert werden, die so erhaltene Elektrodenpaste in einer Schichtdicke auf das elektrisch leitfähige Trägermaterial aufgebracht wird, die eine Flächenbelegung von 4 bis 15 mg/cm² ergibt und daß das Lösungsmittel mit einer solchen Geschwindigkeit abgedampft wird, daß eine Porosität der einsatzfertigen Elektrode von 40 bis 65% erhalten wird.

5. Verfahren nach Anspruch 4, **dadurch gekennzeichnet, daß** als Lösungsmittel N-Methylpyrrolidon verwendet wird.

6. Verfahren nach Anspruch 4, **dadurch gekennzeichnet, daß** die Trocknung der positiven Elektrode in einem Tunnelofen bei einer Bandgeschwindigkeit von 1 bis 5 m/s und einer Temperatur zwischen 90 und 120°C erfolgt.

## Claims

1. Lithium ion cells for high-load applications, **characterized in that** the positive electrodes comprise from 4 to 8 wt% of a conductive black and from 0 to 15 wt% of an expanded graphite and from 3 to 10 wt% of a poly(vinylidene difluoride)-hexafluoropropylene copolymer having a proportion of from 15 to 30 mol% of hexafluoropropylene in the copolymer and further comprise, to make it up to 100%, a lithium-containing metal oxide as the active mass, which is applied to a metallic matrix, the coverage being from 4 to 15 mg/cm² and the porosity being from 40 to 65%.

2. Cell as claimed in claim 1, **characterized in that** the mean particle size of the active material and of the graphite in the positive electrode is between 1 and 15 µm.

3. Cell as claimed in claim 1 and/or claim 2, **characterized in that** the active material in the positive electrode is a lithium-containing cobalt oxide.

4. Process for fabricating a cell as claimed in one or more of claims 1 to 3, **characterized in that** the binder for the positive electrodes is dissolved completely in a solvent and the active material and the conductive additives are homogeneously dispersed in the solution of the binder, the electrode paste thus obtained is applied to the electrically conductive matrix material in a layer thickness which results in a coverage of from 4 to 15 mg/cm², and **in that** the solvent is evaporated at such a rate as to afford a porosity of the ready-to-use electrode of from 40 to 65%.

5. Process as claimed in claim 4, **characterized in that** the solvent used is N-methylpyrrolidone.

6. Process as claimed in claim 4, **characterized in that** the drying of the positive electrode is carried out in a tunnel furnace at a belt velocity of from 1 to 5 m/s and a temperature of between 90 and 120°C.

## Revendications

1. Pile lithium-ions pour des applications à forte puissance,
**caractérisée en ce que**
les électrodes positives ont une masse active constituée de de 4 à 8 % en poids d'une suie de fumée et entre 5 et 15 % en poids d'un graphite expansé et entre 3 et 10 % en poids d'un copolymère de difluorovinylidène-hexafluoropropylène avec une teneur comprise entre 15 et 30 % mol d'hexafluoropropylène dans le copolymère et comme complément à 100 %, d'un oxyde métallique contenant du lithium, cette masse active étant appliquée sur un support métallique, la charge de surface représentant entre 4 et 15 mg/cm² et la porosité entre 40 et 65 %.

2. Pile selon la revendication 1,
**caractérisée en ce que**
la taille moyenne des particules de la matière active et du graphite dans l'électrode positive est comprise entre 1 et 15 µm.

3. Pile selon la revendication 1 et/ou la revendication 2,
**caractérisée en ce que**
la matière active dans l'électrode positive est un oxyde de cobalt contenant du lithium.

4. Procédé de fabrication d'une pile selon l'une ou plusieurs des revendications 1 à 3,
**caractérisé en ce que**
le liant des électrodes positives est dissout complètement dans un solvant et la matière active ainsi que le liant sont dispersés de manière homogène dans la solution de liant, et la pâte d'électrode obtenue est appliquée sur la matière de support conductrice électrique suivant une épaisseur de couche correspondant à une charge de surface de 4 à 15 mg/cm², et
le solvant est évaporé à une vitesse donnant une porosité comprise entre 40 et 65 % pour l'électrode prête à l'emploi.

5. Procédé selon la revendication 4,
**caractérisé en ce que**
le solvant est la N-méthylpyrrolidone.

6. Procédé selon la revendication 4,
**caractérisé en ce que**
le séchage de l'électrode positive se fait dans un four tunnel à une vitesse de défilement de la bande de 1 à 5 m/s et d'une température comprise entre 90 et 120°C.
